# EUROPEAN PATENT SPECIFICATION

(11) **EP 1 667 484 B1**
(45) Date of publication and mention of the grant of the patent: **04.04.2007**
(21) Application number: 04292877.0
(22) Date of filing: 03.12.2004
(51) Int. Cl.: H04Q 7/38

(54) **Method of determining a relative distribution of inbound roaming mobile subscribers between plural mobile networks, and corresponding analyser and telecommunications system**
Verfahren zum Bestimmen der relativen Verteilung von ankommenden umherstreifenden mobilen Teilnehmern auf mehrere mobile Netze, sowie entsprechender Analysierer und Telekommunikationssystem
Procédé pour déterminer une distribution d'abonnés mobiles itinérants relative à plusieurs réseaux mobiles, et analyseur et système de télécommunication correspondants

(43) Date of publication of application: 07.06.2006
(73) Proprietor: Orange S.A., 75505 Paris Cédex 15 (FR)
(72) Inventor: Ciesielski, Eric, 95380 Puiseux en France (FR)
(74) Representative: DeVile, Jonathan Mark

(56) References cited:
- WO-A-01/67782
- GB-A- 2 379 135
- US-A1- 2003 064 722
- US-B1- 6 324 399

## Description

### Field of the Invention

The present invention relates to methods for determining a relative distribution of inbound roaming mobile subscribers between a plurality of mobile networks. The present invention also relates to analysers for determining a relative distribution of inbound roaming mobile subscribers between a plurality of mobile networks, and telecommunications systems including such analysers.

### Background of the Invention

Mobile radio networks such as, for example, the Global System for Mobiles (GSM) and the Universal Mobile Telecommunications System (UMTS) provide a facility for mobile user equipment to communicate within a coverage area provided by the mobile radio network. The radio coverage is provided by base stations which include radio transmitting and receiving equipment for communicating using radio signals. Each of the base stations provides a radio coverage area within which radio communications with the user equipment is possible. An efficiency of the radio coverage provided by the base stations may be one factor in determining an amount of revenue that a network operator can generate from a mobile radio network.

A mobile radio network to which a user has subscribed is referred to as the subscriber's home mobile radio network. When the subscriber moves to another country, where no radio communication is available using its home network, the subscriber's mobile user equipment can attach to a second mobile radio network. The subscriber has therefore roamed to the second mobile radio network and can communicate via the second mobile radio network referred to as a visited mobile radio network.

If there is more than one mobile network available to the mobile subscriber's user equipment within the same geographical area, then the user equipment may become attached to a any of the available networks. As such, if the radio coverage of the second mobile network is deficient in some way then a mobile subscriber may become attached to a third mobile network, which is in competition with the operator of the second mobile radio network. The operator of the second network may therefore lose an opportunity to generate revenue from that mobile subscriber and any further communications made via the competitor's mobile network.

As will be appreciated therefore identifying a relative measure of performance of a mobile network to capture mobile subscribers which roam to a coverage area provided by that mobile network is valuable to the operator of the mobile network.

### Summary of the Invention

According to the present inventions there is provided a method of determining a relative distribution of inbound roaming mobile subscribers between a plurality of mobile networks. The method comprises detecting signalling data sent from or received by a message service centre of a home mobile network of sending mobile subscribers for delivering message data-grams from the sending mobile subscribers to receiving mobile subscribers. The signalling data provides an international mobile subscriber identity number and an identifier indicative of a mobile network with which the receiving mobile subscribers are currently affiliated. The method includes determining from the international mobile subscriber identify number whether each of the receiving mobile subscribers is an inbound roaming mobile subscriber visiting the mobile network with which the receiving mobile subscriber is currently affiliated. If the receiving mobile subscriber is an inbound roaming mobile subscriber, the method includes determining from the identifier indicative of the network, whether the mobile network with which the inbound roaming mobile subscriber is currently affiliated is one of the plurality of mobile networks with respect to which the relative distribution of inbound roaming mobile subscribers is being determined. If the mobile network with which the inbound roaming mobile subscriber is currently affiliated is one of the plurality of networks, the method includes counting the inbound roaming mobile subscriber as being affiliated with the identified one of the plurality of networks to determine the relative distribution of the inbound roaming subscribers.

Operators of mobile networks can take various measures to improve a likelihood of capturing roaming mobile subscribers with respect to other mobile networks with which the roaming subscribers could become attached. As will be known to those acquainted with mobile radio systems, a roaming mobile subscriber's user equipment may select one of a plurality of possible visited mobile networks, when the mobile subscriber has roamed to an area in which the mobile subscriber's home network does not provide any radio coverage. This may be for example if the mobile subscriber has travelled from a county where its home network is located to a different country. The various measures, which the network operator may take, include improving radio coverage or adapting signalling messaging to the effect that the user equipment prefers to affiliate with the operator's mobile network as opposed to another mobile network. As such, it would be valuable to provide the network operator with an indication of a relative amount of roaming mobile subscribers, which have roamed to the operator's mobile network with respect to other mobile networks, which may be available to the roaming mobile subscribers.

Embodiments of the present invention can provide a facility for determining a relative distribution of inbound roaming mobile subscribers between a plurality of mobile radio networks. To this end, embodiments of the invention detect signalling data communicated when a data-gram message is sent from a sending mobile subscriber to a receiving mobile subscriber. The message data-gram for the GSM system for example is a Short Message Service (SMS) text message. The signalling data includes an international mobile subscriber identity number communicated to or from a message service centre in order for the messaging service centre to be provided with information for delivering the message data-gram. The method arranges for the signalling data to be analysed to determine whether or not the receiving mobile subscriber is an inbound roaming mobile subscriber, which has become affiliated with one of the mobile networks. If so, then the inbound roaming mobile subscriber is counted with respect to the identified mobile network, so that for a plurality of inbound roaming mobile subscribers a relative distribution between networks may be established.

The term inbound roaming mobile subscriber is used to imply a mobile subscriber which has roamed to a location which is outside a coverage area provided by its home mobile network. Accordingly, the mobile subscriber attaches to one of a plurality of possible mobile networks as a visited network.

In some embodiments the count of the number of inbound roaming mobile subscribers may be corrected to remove false positive indications. For example, if the SMS message originated from one of the mobile networks under analysis then this is not included in the count. This may occur, for example, when a mobile network sends a welcome message to an inbound roaming subscriber, which it has already captured. A further example concerns eliminating counts associated with sending signalling data repeatedly for delivering the same message data-gram where the mobile subscriber is currently in-active.

Various aspects and features of the present invention are defined in the appended claims and include an analyser, a telecommunications system and a computer program.

### Brief Description of the Drawings

Embodiments of the present invention will now be described by way of example only with reference to the accompanying drawings where like parts are provided with corresponding reference numerals and in which:
Figure 1 is a schematic block diagram illustrating a telecommunications system which includes a first home mobile network and a second visited mobile network;
Figure 2 is a schematic block diagram illustrating a simplified representation of signalling messages exchanged between network elements to deliver an SMS message data-gram to an inbound roaming mobile subscriber;
Figure 3 is a schematic block diagram illustrating a collection of mobile networks in which a relative distribution of inbound roaming mobile subscribers is being determined for three of these networks;
Figure 4 is a graphical representation illustrating a distribution of inbound roaming mobile subscribers between three example mobile networks for inbound roaming mobile subscribers from any other mobile network operator;
Figure 5 is a graphical representation illustrating a distribution of inbound roaming mobile subscribers where the subscribers are from the same competing operator; and
Figure 6 provides a flow diagram illustrating the operation of the analyser to determine the relative distribution of inbound roaming mobile subscribers between a group of mobile networks.

### Description of Example Embodiments

### Delivering Message Data-Grams

In order to provide a better explanation and appreciation of example embodiments of the present invention described below a telecommunications system will be described with reference to the Global System for Mobiles (GSM) standard architecture, and in particular the operation of the GSM system when delivering a message data-gram. As mentioned above a message data-gram in the GSM standard is referred to as a Short Message Service (SMS) message to an inbound roaming mobile subscriber.

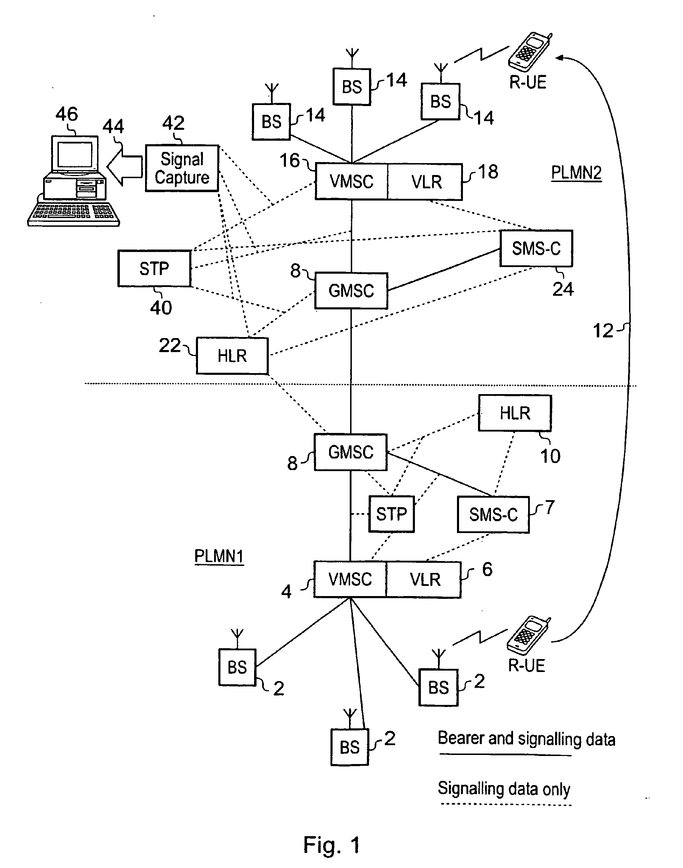

Figure 1 provides an example telecommunications system in which a roaming mobile subscriber's user equipment R-UE roams from a first Public Land Mobile Network (PLMN) PLMN1 to a second mobile network PLMN2. For this example, the first mobile network PLMN1 is the home network of the roaming user equipment RUE and the second mobile network PLMN 2 is a visited mobile network. The roaming mobile subscriber is therefore an inbound roaming mobile subscriber with respect to the second mobile network PLMN2. As shown in Figure 1 base stations 2 of the first and second mobile networks PLMN1, PLMN2 provide a facility for radio communications with the mobile user equipment R-UE in accordance for example with the GSM standard.

Although Figure 1 provides an example of a telecommunications system according to the GSM standard, it will be appreciated that embodiments of the present invention find application with other types of mobile networks such as for example 2.5G and 3G operating in accordance with the Universal Mobile Telecommunications System (UMTS).

As shown in Figure 1 the first mobile network PLMN1 according to the present example is the home network of the roaming mobile user equipment R-UE. The first mobile network comprises a plurality of base stations 2 which serve to provide a radio access interface for providing radio communications to mobile user equipment within a coverage area provided by the first mobile network PLMN1. The first mobile network PLMN1 also includes a Visited Mobile Switching Centre (VMSC) 4 which includes a Visited Location Register 6, and a Short Message Service Centre (SMSC) 7. As will be explained shortly, the VMSC/VLR 4, 6 and the SMSC 7 are concerned with delivering SMS messages to inbound roaming mobile user equipment. A Gateway Mobile Switching Centre (GMSC) 8 forms a gateway network element for incoming and outgoing communications including both voice calls and SMS messages. A Home Location Register (HLR) 10 stores user profile information and data relating to mobile subscribers which have subscribed to the operator of the first network PLMN1. Thus, for example, the HLR 10 will include user profile and context information for a mobile subscriber which has subscribed to an operator of the first mobile network PLMN1, which includes an indication of the location of the user equipment within the first mobile network PLMN1 or another network if the subscriber has roamed to another network.

According to the GSM system a subscriber may roam to a second mobile network and enjoy a facility for mobile communications within a coverage area provided by the second network. Thus, in Figure 1 as illustrated by an arrow 12 a roaming mobile subscriber's user equipment R-UE may roam to a location in which radio communications can only be provided by a radio access interface provided by the base stations 14 of the second mobile network PLMN2. As shown in Figure 1 the second mobile network PLMN2 also includes a Visited Mobile Switching Centre (VMSC) 16 including a Visited Location Register (VLR) 18 and a Gateway MSC 20 in correspondence with the elements which are present in the first mobile network PLMN1. The second mobile network PLMN2 also includes a Home Location Register (HLR) 22 to store user profile data and information about mobile subscribers which have subscribed to the operator of the second mobile network PLMN2.

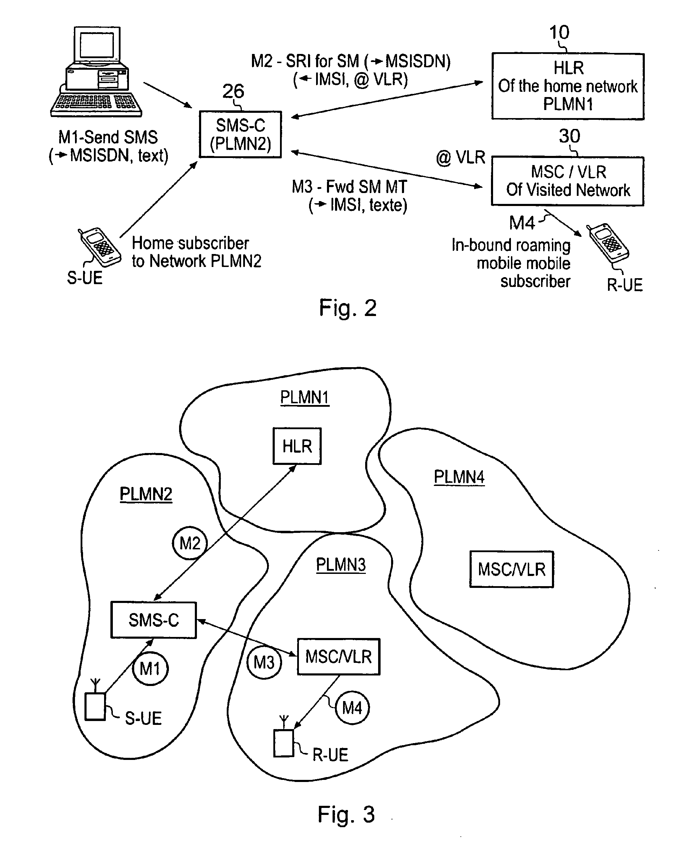

When the subscriber roams to another mobile radio network, the subscriber can communicate via the other mobile radio network (referred to as a visited mobile radio network) providing a roaming agreement exists with the operator of the visited mobile radio network. Upon roaming to the visited mobile radio network a location up-date is performed. According to the location up-date process, IMSI for the roaming user equipment is stored in the VLR 18 of the visited mobile radio network PLMN2 and signalling is exchanged between the visited mobile network and a HLR 10 of the home mobile radio network PLMN1. The signalling data identifies that the roaming user equipment R-UE of the subscriber is now attached to the visited mobile radio network. Thus, when a call is placed to the roaming user equipment signalling data is exchanged between the visited mobile network PLMN2 and the HLR 10 of the home mobile radio network PLMN1 so that a call can be routed to the roaming user equipment on the visited mobile radio network. More particularly relevant to the present technique is the delivery of a short service message (SMS) to the roaming mobile user equipment which will be described with reference to Figure 2.

In Figure 2 a simplified representation of the elements associated with delivery of an SMS message to roaming mobile user equipment R-UE is presented. As illustrated in Figure 1 each of the first and second mobile networks PLMN1, PLMN2 includes a Short Message Service Centre 7, 24 which controls the routing and delivery of SMS messages to mobile user equipment. According to the GSM standard an SMS message is always routed to the SMSC of the home mobile network of the mobile subscriber which is sending the SMS message. As shown in Figure 2 a sending mobile subscriber's user equipment S-UE generates an SMS message which is sent via the radio access network provided by the base stations 4 to the SMSC 26 of the second mobile network PLMN2. Thus the sending mobile user equipment S_UE is a home subscriber to the second mobile network PLMN2. As shown in Figure 2 the SMS message is received by the SMSC 26 with a mobile subscriber international services directory number (MSISDN) of the mobile subscriber to which the message is to be sent along with the text of the message. The SMS message forms a message data-gram to be sent to the receiving mobile user equipment R-UE.

In order to deliver the SMS message to the receiving mobile subscriber R-UE the SMSC 24 must acquire the International Mobile Subscriber Identity (IMSI) number and an identification of the VLR of the mobile network to which the roaming mobile user equipment R-UE is currently affiliated. As represented in Figure 2 by a message exchange M2 the SMSC sends a Mobile Application Part (MAP) message referred to as a Send Routing Information for Short Message (SRI for SM) message for the SMS message to the HLR of the home network of the roaming mobile user equipment R-UE. For the present example the HLR is the HLR 10 of the first mobile network PLMN1. As indicated by the message exchange M2, the SRI for SM includes the MSISDN to allow the HLR to identify the appropriate mobile subscriber. The HLR 10 returns the IMSI of the roaming mobile user equipment R-UE together with an identifier of the VLR of the network with which the roaming mobile user equipment R-UE is currently attached.

As illustrated by the message exchange M3, once the SMSC 26 has received the IMSI and the identifier of the VLR of the visited network, the SMS is forwarded using the message exchange M3 to the MSC and VLR 30 of the network with which the roaming mobile user equipment R-UE is currently affiliated. According to the message exchange M4 the SMS message is then delivered to the roaming mobile user equipment R-UE.

### Explanation of Example Embodiments

Embodiments which utilise the present technique to identify a relative market share between a plurality of mobile networks utilise the Signalling System 7 message exchange according to the MAP in order to identify a relative share of inbound roaming mobile user equipment between a plurality of networks. As illustrated in Figure 1 it is conventional for a mobile network to include a Signalling Transfer Point (STP) 40 which provides a concentration point for SS7 signalling communications between a mobile radio network and other networks. Thus the STP 40 will be provided with connection channels to the GMSC and the VMSC and the HLR of the mobile network as illustrated by dashed lines. According to the present technique signalling data is captured by a signalling capture device 42 utilising probes which detect signalling data communicated to the STP 40. As illustrated by a large arrow 44, an analyser 46 then analyses the captured signalling data in order to determine a relative distribution of inbound roaming mobile subscribers between the plurality of networks. However, as will be appreciated the various types of signalling data which are exchanged between networks and the many SMS messages communicated will not all relate to inbound roaming mobile user equipment and accordingly a first step is required in order to identify that an SMS message is being routed to an inbound roaming mobile user equipment.

Figure 3 provides an example illustration of a telecommunications system in which roaming mobile user equipment many communicate via a plurality of networks. For the present example the illustrated embodiment will determine a relative distribution of inbound roamers between three mobile networks PLMN2, PLMN3, PLMN4 although in order to complete the explanation a fourth mobile network is also shown in Figure 3 which corresponds to the first mobile network PLMN1 shown in Figure 1. Furthermore, the signalling data messages exchanged in Figure 2 are also represented in Figure 3 and bear the same alphanumeric references M1, M2, M3.

As explained above, embodiments of the present invention provide a facility for determining a relative distribution of inbound roaming mobile user equipment between a plurality of networks in this case the second, third and fourth networks PLMN2, PLMN3, PLMN4 as shown in Figure 3. Accordingly, a relative performance of the network in capturing mobile user equipment can be provided. Thus, in one embodiment the three mobile networks PLMN2, PLMN3 and PLMN4 will provide mobile radio coverage in the same geographical area for example within one country. The first mobile network which will be for the present example a home mobile network for a roaming mobile user equipment R-UE may be located in a different geographical location and therefore will not form part of the relative performance analysis.

In order to provide a relative distribution of inbound roaming mobile user equipment between the plurality of networks shown in Figure 3 it is first necessary to identify that the mobile subscriber's user equipment to which an SMS message is to be directed is in fact an inbound roaming mobile subscriber. To this end signalling data is captured by the signalling capture device 42 and analysed by the analyser 46 to the effect of identifying that an SMSC is attempting to send an SMS message to a roaming mobile user equipment. Thus for the present example the second mobile network PLMN2 which is one of the networks for which the relative distribution is being determined provides the capture point for the signalling data concerned. Thus as illustrated in Figure 2 a sending mobile user equipment S-UE communicates an SMS message to the SMS Centre 24 of the second mobile network PLMN2. Signalling data is then detected in response to an SRI for SM message forming the message exchange M2 or the message exchange M3 which provides the IMSI and an identifier of the mobile network which the receiving mobile user equipment R-UE is currently attached. Therefore, to identify that a receiving mobile user equipment of an SMS message is firstly an inbound roaming mobile user equipment and secondly is attached to one of the three mobile networks PLMN2, PLMN3, PLMN4 for which the relative distribution is being analysed the following steps are required:-
- The IMSI of the receiving mobile user equipment is analysed with respect to a range of possible values of IMSI which are assigned to each network operator of a mobile network. Thus from the IMSI it is possible to determine that the receiving mobile user equipment is not a subscriber of one of the three networks PLMN2, PLMN3, PLMN4 being analysed. In other words one of the three networks is not a home mobile network of the receiving mobile user equipment.
- Using the identifier of the VLR of the mobile network to which the SMS message is to be sent for receiption by the roaming mobile user equipment, the mobile network with which the roaming inbound mobile subscriber is attached is identified which can therefore be counted as an inbound subscriber acquired by that network.

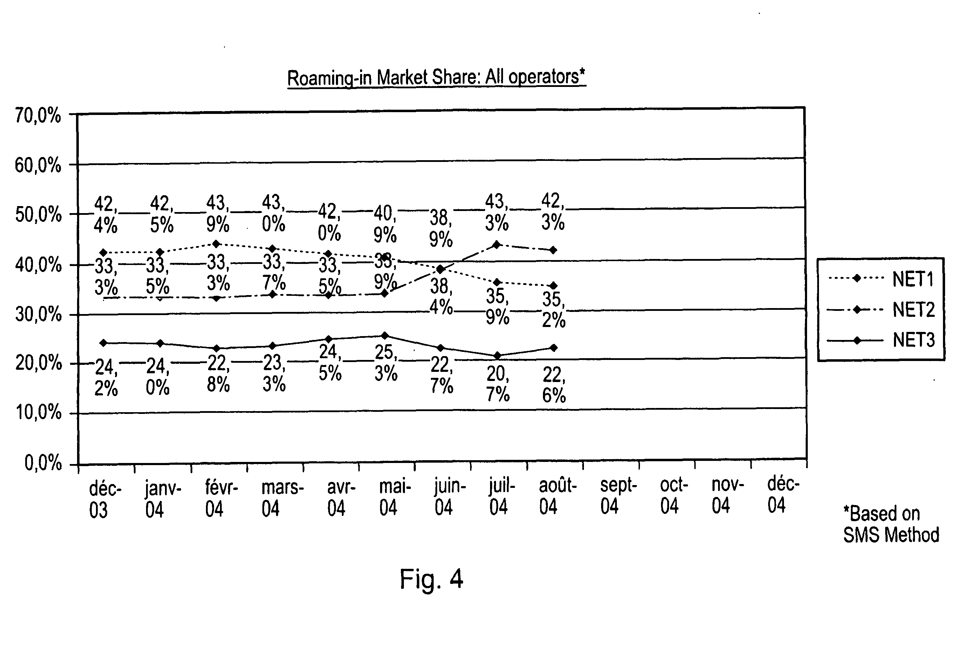

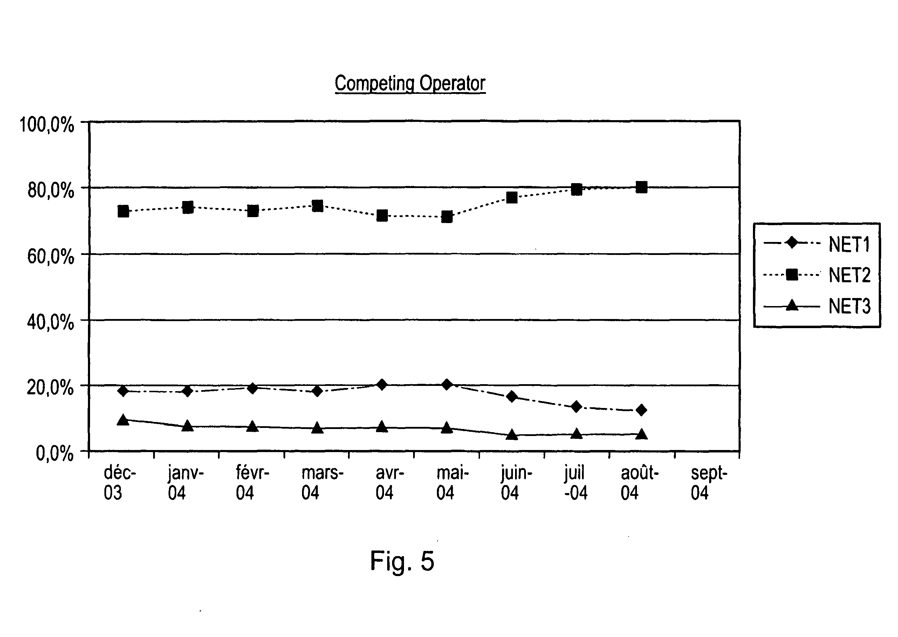

By counting the number of inbound roaming mobile subscribers captured by each of the mobile networks a relative distribution of inbound roaming mobile subscribers can be determined. An example of results illustrating a distribution of market share throughout a year for three sample networks is illustrated in Figure 4. An alternative representation provides a relative market share between three networks for capturing inbound roaming mobile subscribers from the same rival operator. This is illustrated in Figure 5.

### Correction of Counted In-bound Roaming Mobile Subscribers

In order to improve the accuracy with which the relative distribution of inbound roaming mobile subscribers is determined, some embodiments include a step of filtering messages which are not pertinent to determining this relative distribution. For example it is conventional for some networks to generate so called welcome SMS messages when an inbound roaming mobile subscriber attaches to that network. These messages are generated by an element within the mobile network concerned and therefore correspond to subscribers, which have already been captured by the network concerned. Accordingly, such messages are ignored. Furthermore, in message M2 illustrated above, if a mobile subscriber is currently inactive then the SMSC 26 will repetitively communicate the Send Routing Information for short message (SRI for SM) message and obtain the IMSI and the identifier of the VLR of the network to which the receiving subscriber is attached, until the SMS message is delivered. Therefore, repetitive messages (transactions with same IMSI and VLR) are just taken into account once. Alternatively only the message M3 may be used to identify the inbound roaming mobile subscribers and the network with which they are attached.

The signalling capture device 42 may be provided from a Process7 tool used within the framework of roaming. A Process7 is the tool, marketed by STELEUS (ex NMG Telecom), captures the messages of identified protocols such as GSM (MAP, CAP) which are exchanged between the network operators. This tool allows counting statistics to be generated, the decoding of the messages of protocols, and the generation of alarms with respect to thresholds for particular parameters.

The limitations of the method are:
1) Need for a volume of sufficient SMS (100). This may require an aggregation of the results of several days to give a significant result.
2) A time of establishment of the results (request + post processing) should be relatively consequent. This is because it is necessary to capture the results within a particular time because the result can evolve on a daily basis. However, a periodic follow-up (weekly or semi-monthly) can be considered.
3) An agreement SMS-IO should be preferably in force (or, if not of agreement SMS-IO, not of filtering of messages SRI for SM sent to the foreign HLR).

### Summary of Operation

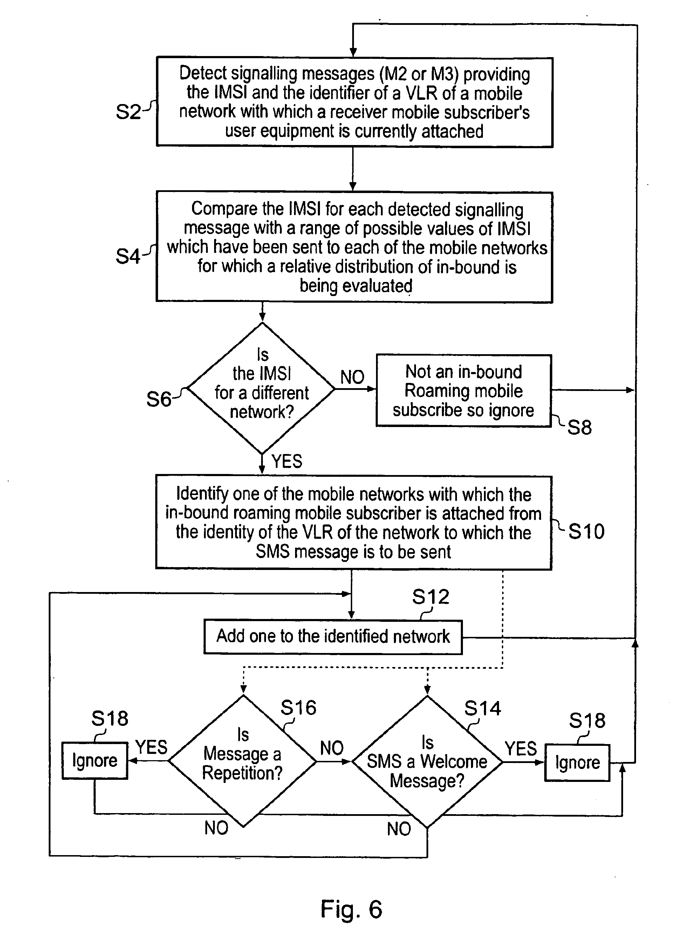

A flow diagram illustrating the operation of the data analyser 46 in determining a relative distribution of inbound roaming mobile subscribers between a plurality of networks is provided in Figure 6. The flow diagram provided in Figure 6 is summarised as follows:
S2: The analyser receives the captured Signal System 7 MAP messages and identifies an IMSI and an identifier of a VLR of a mobile network to which an SMS message is to be delivered to a receiving mobile subscriber.
S4: The IMSI value of the signalling message associated with the delivery of an SMS message to a receiving mobile subscriber is analysed with respect to a possible range of values associated with each of the mobile networks for which the relative distribution of inbound roamers is being evaluated. From the analysis of the range of the IMSI values the analyser determines whether the receiving mobile subscriber is an inbound roaming mobile subscriber. The receiving mobile subscriber will be an inbound roaming mobile subscriber if the IMSI value is outside a range associated with each of the plurality of mobile networks.
S6: As a result of the analysis in the step S4 it is determined whether the IMSI is for a receiving subscriber having a home network which is different to that of the mobile networks being analysed. That is, is the receiving mobile subscriber an inbound roaming mobile subscriber?
S8: If the receiving mobile subscriber is not an inbound roaming mobile subscriber the signalling messages associated with the delivery of the current SMS message are ignored and processing continues to step S2 for the next SMS message.
S10: If the SMS message is to be delivered to an inbound roaming mobile subscriber then the identifier of the VLR of the network with which the inbound roaming mobile subscriber is attached is used to identify the mobile network to which the SMS message is to be routed. If the VLR identifier is for one of the mobile networks for which the relative distribution is being determined then one is added to the mobile network concerned.
Optionally before proceeding to step S12 step S14 and S16 may be performed.
S14: From the SMS message being delivered it is determined from, for example, the mobile subscriber number of the sending user equipment whether the SMS was generated by a network element within the mobile network in which the SMSC is located. For example the SMS message may be a welcome message. If it is then the current SMS message is ignored and processing continues at step S2. Otherwise processing proceeds to step S12.
S16: From the signalling messages M2 or M3 it is determined whether the signalling messages are being repeated. Thus, if repetitive messages (with same IMSI and VLR) occur then just one message is considered. Alternatively, by reviewing signalling message M3 only, then a problem of repeated messages does not occur (easy to filter). If the message is not being repeated i.e. the subscriber is not inactive then processing proceeds to step S12. Otherwise processing proceeds to step S18 and the current SMS message is ignored and processing continues from step S2.

Various aspects and features of the present invention are defined in the appended claims. Various modifications may be made to the example embodiments herein before described without departing from the scope of the present invention. For example, although the GSM mobile network architecture has been described, other mobile telecommunications systems can be employed in which appropriate adaptation of the system elements and signalling messages can be made.

## Claims

1. A method of determining a relative distribution of inbound roaming mobile subscribers between a plurality of mobile networks, the method comprising
detecting signalling data sent from or received by a message service centre of a home mobile network of sending mobile subscribers for delivering message data-grams from the sending mobile subscribers to receiving mobile subscribers, the signalling data providing an international mobile subscriber identity number and an identifier indicative of a mobile network with which the receiving mobile subscribers are currently affiliated,
determining from the international mobile subscriber identity number whether each of the receiving mobile subscribers is an inbound roaming mobile subscriber visiting a mobile network with which the receiving mobile subscriber is currently affiliated, and
if the receiving mobile subscriber is an inbound roaming mobile subscriber, determining from the identifier of the network, whether the mobile network with which the inbound roaming mobile subscriber is currently affiliated is one of the plurality of mobile networks with respect to which the relative distribution of inbound roaming mobile subscribers is being determined, and
if the mobile network with which the inbound roaming mobile subscriber is currently affiliated is one of the plurality of networks, counting the inbound roaming mobile subscriber as being affiliated with the identified one of the plurality of networks to determine the relative distribution of the inbound roaming subscribers.

2. A method as claimed in Claim 1, wherein the signalling data includes first signalling data sent to the message switching centre from a home mobile network of the receiving mobile subscriber in response to a send routing information for a message data-gram sent from the message service centre to the home mobile network to route the data-gram to the receiving mobile subscriber.

3. A method as claimed in Claim 2, comprising
analysing the first signalling data to determine whether the first signalling data includes a repetitive version of the signalling data which is sent more than once for the same inbound mobile subscriber, and the counting comprises only counting the inbound mobile subscriber once per international mobile subscriber identify number.

4. A method as claimed in Claim 1, wherein the signalling data includes second signalling data sent from the message switching centre to the mobile network with which the receiving mobile subscriber is currently affiliated, the second signalling data including the international mobile subscriber number and an identifier of the mobile network with which the receiving mobile subscriber is affiliated.

5. A method as claimed in any preceding Claim, comprising
determining from a predetermined range of number values of international subscriber identity numbers associated with each operator of mobile networks that a home network of the receiving mobile subscriber is not one of the plurality of networks with respect to which the relative distribution is being determined.

6. A method as claimed in any preceding Claim, wherein the determining from the international mobile subscriber identify number whether each of the receiving mobile subscribers is an inbound roaming mobile subscriber, comprises
determining from a predetermined range of values of international subscriber identity numbers associated with each operator of mobile networks that a home network of the receiving mobile subscriber is not one of the plurality of networks with respect to which the relative distribution is being determined.

7. A method as claimed in any preceding Claim, wherein at least one of the home mobile network of the receiving mobile subscriber and the home network of the sending mobile subscriber is one of the plurality of mobile networks with respect to which the relative distribution of inbound roaming mobile subscribers is being determined.

8. An analyser for determining a relative distribution of inbound roaming mobile subscribers between a plurality of mobile networks, the apparatus comprising
a detector (42) operable to detect signalling data sent from or received by a message service centre (7) of a home mobile network (PLMN1) of sending mobile subscribers for delivering message data-grams from the sending mobile subscribers to receiving mobile subscribers, the signalling data providing an international mobile subscriber identity number and an identifier indicative of a mobile network with which the receiving mobile subscribers are currently affiliated,
an analysing processor (46) operable to determine from the international mobile subscriber identify number whether each of the receiving mobile subscribers is an inbound roaming mobile subscriber visiting a mobile network with which the receiving mobile subscriber is currently affiliated, and
if the receiving mobile subscriber is an inbound roaming mobile subscriber, to determine from the identifier of the network, whether the mobile network (PLMN2) with which the inbound roaming mobile subscriber is currently affiliated is one of the plurality of mobile networks with respect to which the relative distribution of inbound roaming mobile subscribers is being determined, and
if the mobile network (PLMN2) with which the inbound roaming mobile subscriber is currently affiliated is one of the plurality of networks, to count the inbound roaming mobile subscriber as being affiliated with the identified one of the plurality of networks to determine the relative distribution of the inbound roaming subscribers.

9. An analyser as claimed in Claim 8, wherein the signalling data includes first signalling data sent to the message switching centre from a home mobile network of the receiving mobile subscriber in response to a send routing information message for a message data-gram sent from the message service centre to the home mobile network to route the data-gram to the receiving mobile subscriber.

10. An analyser as claimed in Claim 9, wherein the analyser is operable
to analyse the first signalling data to determine whether the first signalling data includes a repetitive version of the signalling data which is sent more than once for the same inbound mobile subscriber, and the counting comprises only counting the inbound mobile subscriber once per international mobile subscriber identify number.

11. An analyser as claimed in Claim 8, wherein the signalling data includes second signalling data sent from the message switching centre to the mobile network with which the receiving mobile subscriber is currently affiliated, the second signalling data including the international mobile subscriber number and the identifier of the mobile network with which the receiving mobile subscriber is affiliated.

12. An analyser as claimed in any Claims 8 to 11, wherein at least one of the home mobile network (PLMN1) of the receiving mobile subscriber and the home network (PLMN1) of the sending mobile subscriber is one of the plurality of mobile networks with respect to which the relative distribution of inbound roaming mobile subscribers is being determined.

13. An analyser as claimed in any Claims 8 to 12, wherein the analysing processor (46) is operable to detect that the message data-gram was generated by a network element within the home mobile network (PLMN1), and the counting comprises not counting the receiving mobile subscriber to which the message data-gram is sent.

14. An analyser as claimed in any Claims 8 to 13, wherein the analysing processor (46) is operable to determine from a predetermined range of number values of international subscriber identity numbers associated with each operator of mobile networks that a home network (PLMN1) of the receiving mobile subscriber is not one of the plurality of networks with respect to which the relative distribution is being determined.

15. A telecommunications system comprising
a plurality of mobile networks (PLMN1, PLMN2), and
an analysing apparatus (46) as claimed in any of Claims 8 to 14, operable to determine a relative distribution of inbound roaming mobile subscribers between the plurality of mobile networks:

16. A computer program providing computer executable instructions which when loaded onto a computer causes the computer to perform the method according to any of Claims 1 to 7.

17. A data carrier having a recording medium, the recording medium having recorded thereon a computer program according to Claim 16.

18. A signal representing the computer program according to Claim 16.

## Patentansprüche

1. Verfahren zum Bestimmen einer relativen Verteilung von eingehenden bzw. ankommenden Roaming-Mobiltelefonteilnehmern auf eine Mehrzahl von Mobiltelefonnetzwerken, wobei das Verfahren aufweist:
das Erfassen von Signalisierungsdaten, die von einem Nachrichtendienstzentrum eines Heimmobiltelefonnetzwerkes von sendenden Mobiltelefonteilnehmern für das Zustellen von Nachrichtendatagrammen von den sendenden Mobiltelefonteilnehmern zu empfangenden Mobiltelefonteilnehmern gesendet werden oder von diesem empfangen werden, wobei die Signalisierungsdaten eine internationale Mobiltelefonteilnehmer-Identifizierungsnummer und einen ldentifizier bereitstellen, der ein Mobiltelefonnetzwerk anzeigt, mit dem die empfangenden Mobiltelefonteilnehmer verbunden sind,
das Bestimmen aus der internationalen Mobiltelefonteilnehmer-Identifizierungsnummer, ob jeder der empfangenden Mobiltelefonteilnehmer ein eingehender Roaming-Mobiltelefonteilnehmer ist, der das Mobiltelefonnetzwerk besucht, mit dem der empfangende Mobiltelefonteilnehmer gegenwärtig verbunden ist, und
falls der empfangende Mobiltelefonteilnehmer ein eingehender Roaming-Mobiltelefonteilnehmer ist, das Bestimmen aus dem Identifizierer des Netzwerkes, ob das Mobiltelefonnetzwerk, mit dem der eingehende Roaming-Mobiltelefonteilnehmer gegenwärtig verbunden ist, eines der Mehrzahl von Mobiltelefonnetzwerken ist, bei dem die relative Verteilung der ankommmenden Roaming-Mobiltelefonteilnehmer bestimmt wird, und
falls das Mobiltelefonnetzwerk, mit dem der ankommende Roaming-Mobiltelefonteilnehmer gegenwärtig verbunden ist, eines der Mehrzahl von Netzwerken ist, das Zählen des ankommenden Roaming-Mobiltelefonteilnehmers als mit dem identifizierten Netzwerk der Mehrzahl von Netzwerken verbunden, um die relative Verteilung der eingehenden Roaming-Teilnehmer zu bestimmen.

2. Verfahren nach Anspruch 1 bei dem die Signalisierungsdaten erste Signalisierungsdaten beinhalten, die zu dem Nachrichtenvermittlungszentrum von einem Heimmobiltelefonnetzwerkes empfangenden Mobiltelefonteilnehmer in Antwort auf eine Senderouting-Information für ein Nachrichtendatagramm, das von dem Nachrichtendienstzentrum zu dem Heimmobiltelefonnetzwerk gesendet wird, um das Datengramm zu dem empfangenden Mobiltelefonteilnehmer zu leiten, beinhaltet.

3. Verfahren nach Anspruch 2, das aufweist
Analysieren der ersten Signalisierungsdaten, um zu bestimmen, ob die ersten Signalisierungsdaten eine sich wiederholende Version der Signalisierungsdaten beinhalten, die mehr als einmal für den selben eingehenden Mobiltelefonteilnehmer gesendet wird, und Zählen des eingehenden Mobiltelefonteilnehmers nur einmal pro internationaler Mobiltelefonteilnehmer-Identifizierungsnummer.

4. Verfahren nach Anspruch 1, bei dem Signalisierungsdaten zweite Signalisierungsdaten beinhalten, die von dem Nachrichtenvermittlungszentrum zu dem Mobiltelefonnetzwerk gesendet wurden, mit dem der empfangende Mobiltelefonteilnehmer gegenwärtig verbunden ist, wobei die zweiten Signalisierungsdaten die internationale Mobiltelefonteilnehmernummer und einen Identifizierer des Mobiltelefonnetzwerkes, mit dem der empfangende Mobiltelefonteilnehmer verbunden ist, beinhalten.

5. Verfahren nach einem der vorherigen Ansprüche, das aufweist
Bestimmen aus einem vorbestimmten Bereich von Zahlenwerten von internationalen Teilnehmeridentitätsnummern, die mit jedem Operator von Mobiltelefonnetzwerken verknüpft ist, das ein Heimnetzwerk des empfangenden Mobiltelefonteilnehmers nicht eines der Mehrzahl von Netzwerken ist, bei denen die relative Verteilung bestimmt wird.

6. Verfahren nach einem der vorherigen Ansprüche, bei dem das Bestimmen aus der internationalen Mobiltelefonteilnehmer-Identifizierungsnummer, ob jeder der empfangenden Mobiltelefonteilnehmer ein ankommender Roaming-Mobiltelefonteilnehmer ist, aufweist
das Bestimmen aus einem vorbestimmenden Bereich von Werten von internationalen Teilnehmeridentitätsnummern, die mit jedem Operator der Mobiltelefonnetzwerke verknüpft ist, daß ein Heimnetzwerk des empfangenden Mobiltelefonteilnehmers nicht eines der Mehrzahl von Netzwerken ist, bei denen die relative Verteilung bestimmt wird.

7. Verfahren nach einem vorherigen Ansprüche, bei dem zumindest das Heimmobiltelefonnetzwerk des empfangenden Mobiltelefonteilnehmers oder das Heimnetzwerk des sendenden Mobiltelefonteilnehmers eines der Mehrzahl von Mobiltelefonnetzwerke ist, bei dem die relative Verteilung von eingehenden Roaming-Mobiltelefonteilnehmern bestimmt wird.

8. Analysator für das Bestimmen einer relativen Verteilung von eingehenden Roaming-Mobiltelefonteilnehmern auf eine Mehrzahl von Mobiltelefonnetzwerken, wobei die Vorrichtung aufweist,
einen Detektor (42), der betreibbar ist, um Signalisierungsdaten zu erfassen, die von einem Nachrichtendienstzentrum (7) eines Heimmobiltelefonnetzwerkes (PLMN1) sendenden Mobiltelefonteilnehmern gesendet oder von diesem empfangen wird, für das Ausliefern von Nachrichtendatagrammen von den sendenden Mobiltelefonteilnehmern zu den empfangenden Mobiltelefonteilnehmen, wobei die Signalisierungsdaten eine internationale Mobiltelefonteilnehmer-Identitätsnummer und einen Identifizier bereitstellen, der ein Mobiltelefonnetzwerk anzeigt, mit dem die empfangenden Mobiltelefonteilnehmer gegenwärtig verbunden sind,
einen Analyseprozessor (46), der betreibbar ist, um aus der internationalen Mobiltelefonteilnehmer-Identifizierungsnummer zu bestimmen, ob jeder der empfangenden Mobiltelefonteilnehmer ein eingehender Roaming-Mobiltelefonteilnehmer ist, der ein Mobiltelefonnetzwerk besucht, mit dem der empfangende Mobiltelefonteilnehmer gegenwärtig verbunden ist, und
falls der empfangende Mobiltelefonteilnehmer ein eingehender Roaming-Mobiltelefonteilnehmer ist, um zu Bestimmen aus dem Identifizierer des Netzwerkes, ob das Mobilltelefonnetzwerk (PLMN2), mit dem der eingehende Roaming-Mobiltelefonteilnehmer verbunden ist, eines der Mehrzahl von Mobiltelefonnetzwerken ist, bei denen die relative Verteilung von eingehenden Roaming-Mobiltelefonteilnehmern bestimmt wird, und
falls das Mobiltelefonnetzwerk (PLMN2), mit dem der eingehende Roaming-Mobiltelefonteilnehmer gegenwärtig verbunden ist, eines der Mehrzahl von Netzwerken ist, Zählen des eingehenden Roaming-Mobiltelefonteilnehmers als mit dem identifizierten Netzwerk der Mehrzahl von Netzwerken verbunden, um die relative Verteilung der eingehenden Roaming Teilnehmer zu bestimmen.

9. Analysator nach Anspruch 8, wobei die Signalisierungsdaten erste Signalisierungsdaten beinhalten, die zu dem Nachrichtenvermittlungszentrum gesendet werden von einem Heimmobiltelefonnetzwerk des empfangenden Mobiltelefonteilnehmers in Antwort auf eine Senderouting-Informationsnachricht für ein Nachrichtendatagramm, daß von dem Nachrichtendienstzentrum zu dem Heimmobiltelefonnetzwerk gesendet wurde, um das Datagramm zu dem empfangenden Mobiltelefonteilnehmer zu leiten.

10. Analysator nach Anspruch 9, wobei der Analysator betreibbar ist, um die ersten Signalisierungsdaten zu analysieren, um zu bestimmen, ob die ersten Signalisierungsdaten eine wiederholte Version der Signalisierungsdaten beinhalten, die mehr als einmal für den selben eingehenden Mobiltelefonteilnehmer gesendet wurden, und eingehende Telefonteilnehmer nur einmal pro internationaler Mobiltelefonteilnehmer-Identifikationsnummer zu zählen.

11. Analysator nach Anspruch 8, bei zwei der Signalisierungsdaten beinhalten, die von dem Nachrichtenvermittlungszentrum zu dem Mobiltelefonnetzwerk gesendet wurden, mit dem der empfangende Mobiltelefonteilnehmer gegenwärtig verbunden ist, wobei die zweiten Signalisierungsdaten die internationale Mobiltelefonteilnehmernummer und den Identifizierer des Mobiltelefonnetzwerkes, mit dem der empfangende Mobiltelefonteilnehmer verbunden ist, beinhaltet.

12. Analysator nach einem der Ansprüche 8 bis 11, bei dem zumindest das Heimmobiltelefonnetzwerk (PLMN1) des empfangenden Mobiltelefonteilnehmers oder das Heimnetzwerk (PLMN1) des sendenden Mobiltelefonteilnehmers eines der Mehrzahl von Mobiltelefonnetzwerken ist, bei denen die relative Verteilung der eingehenden Roaming Mobiltelefonteilnehmern bestimmt wird.

13. Analysator nach einem der Ansprüche 8 bis 12, bei dem der analysierende Prozess (46) betreibbar ist, um zu erfassen, daß das Nachrichtendatagramm erzeugt wurde durch ein Netzwerkelement innerhalb des Heimmobiltelefonnetzwerkes (PLMN1) und das Zählen aufweist das Nicht-Zählen des empfangenden Mobiltelefonteilnehmers, an dem das Nachrichtendatagramm gesendet wurde.

14. Analysator nach einem der Ansprüche 8 bis 13, bei dem der analysierende Prozessor (46) betreibbar ist, um aus einem vorbestimmten Bereich von Zahlenwerten von internationalen Teilnehmeridentifizierungsnummern, die mit jedem Operator von Mobiltelefonnetzwerken verknüpft sind, zu bestimmen, das ein Heimnetzwerk (PLMN1) des empfangenden Mobiltelefonteilnehmers nicht Teil der Mehrzahl von Netzwerken ist, bei denen die relative Verteilung bestimmmt wird.

15. Telekommunikationssystem, das aufweist,
eine Mehrzahl von Mobiltelefonnetzwerken (PLMN1), (PLMN2) und
eine Analysevorrichtung (46) wie in einem der Ansprüche 8 - 14 beansprucht, die betreibbar ist, um eine relative Verteilung von eingehenden Roaming-Mobiltelefonteilnehmern auf die Mehrzahl von Mobiltelefonnetzwerken zu bestimmen.

16. Computerprogramm, das computerausführbare Befehle bereitstellt, die, wenn Sie auf einem Computer geladen werden, veranlassen, daß der Computer das Verfahren nach einem der Ansprüche 1 bis 7 durchführt.

17. Datenträger mit einem Aufzeichnungsmedium, wobei auf dem Aufzeichnungsmedium ein Computerprogramm nach Anspruch 16 aufgezeichnet ist.

18. Signal, welches das Computerprogramm nach Anspruch 16 darstellt.

## Revendications

1. Procédé de détermination d'une distribution relative d'abonnés mobiles itinérants entrants entre une multiplicité de réseaux mobiles, le procédé comprenant les étapes suivantes :
détecter des données de signalisation envoyées ou reçues par un centre de service de messages d'un réseau mobile nominal d'abonnés mobiles émetteurs, pour distribuer à des abonnés mobiles récepteurs des datagrammes de messages provenant des abonnés mobiles émetteurs, les données de signalisation fournissant un numéro d'identité d'abonné mobile international et un identificateur indiquant un réseau mobile auquel les abonnés mobiles récepteurs sont affiliés au moment présent,
déterminer à partir du numéro d'identité d'abonné mobile international si chacun des abonnés mobiles récepteurs est un abonné mobile itinérant entrant, visitant un réseau mobile auquel l'abonné mobile récepteur est affilié au moment présent, et
si l'abonné mobile récepteur est un abonné mobile itinérant entrant, déterminer à partir de l'identificateur du réseau si le réseau mobile auquel l'abonné mobile itinérant entrant est affilié au moment présent est l'un de la multiplicité de réseaux mobiles vis-à-vis desquels on détermine la distribution relative d'abonnés mobiles itinérants entrants, et
si le réseau mobile auquel l'abonné mobile itinérant entrant est affilié au moment présent est l'un de la multiplicité de réseaux, compter l'abonné mobile itinérant entrant comme étant affilié au réseau identifié de la multiplicité de réseaux, pour déterminer la distribution relative des abonnés itinérants entrants.

2. Procédé selon la revendication 1, dans lequel les données de signalisation comprennent des premières données de signalisation envoyées au centre de commutation de messages à partir d'un réseau mobile nominal de l'abonné mobile récepteur, en réponse à une information de routage d'envoi pour un datagramme de message envoyé par le centre de service de messages au réseau mobile nominal, pour router le datagramme vers l'abonné mobile récepteur.

3. Procédé selon la revendication 2, comprenant l'étape suivante :
analyser les premières données de signalisation pour déterminer si les premières données de signalisation incluent une version répétitive des données de signalisation qui est envoyée plus d'une fois pour le même abonné mobile entrant, et le comptage comprend le comptage de l'abonné mobile entrant une seule fois par numéro d'identité d'abonné mobile international.

4. Procédé selon la revendication 1, dans lequel les données de signalisation incluent des deuxièmes données de signalisation envoyées par le centre de commutation de messages vers le réseau mobile auquel l'abonné mobile récepteur est affilé au moment présent, les deuxièmes données de signalisation incluant le numéro d'abonné mobile international et un identificateur du réseau mobile auquel l'abonné mobile récepteur est affilié.

5. Procédé selon l'une quelconque des revendications précédentes, comprenant l'étape suivante :
déterminer, à partir d'une plage prédéterminée de valeurs numériques de numéros d'identité d'abonné internationaux associée à chaque opérateur de réseaux mobiles, qu'un réseau nominal de l'abonné mobile récepteur n'est pas l'un de la multiplicité de réseaux vis-à-vis desquels on détermine la distribution relative.

6. Procédé selon l'une quelconque des revendications précédentes, dans lequel la détermination, d'après le numéro d'identité d'abonné mobile international, du fait que chacun des abonnés mobiles récepteurs est ou non un abonné mobile itinérant entrant, comprend :
la détermination, d'après une plage de valeurs prédéterminée de numéros d'identité d'abonné internationaux associée à chaque opérateur de réseaux mobiles, qu'un réseau nominal de l'abonné mobile récepteur n'est pas l'un de la multiplicité de réseaux vis-à-vis desquels on détermine la distribution relative.

7. Procédé selon l'une quelconque des revendications précédentes, dans lequel au moins un du réseau mobile nominal de l'abonné mobile récepteur et du réseau nominal de l'abonné mobile émetteur est l'un de la multiplicité de réseaux mobiles vis-à-vis desquels on détermine la distribution relative d'abonnés mobiles itinérants entrants.

8. Analyseur pour déterminer une distribution relative d'abonnés mobiles itinérants entrants entre une multiplicité de réseaux mobiles, l'appareil comprenant :
un détecteur (42) pouvant fonctionner de façon à détecter des données de signalisation envoyées ou reçues par un centre de service de messages (7) d'un réseau mobile nominal (PLMN1) d'abonnés mobiles émetteurs, pour distribuer à des abonnés mobiles récepteurs des datagrammes de messages provenant des abonnés mobiles émetteurs, les données de signalisation fournissant un numéro d'identité d'abonné mobile international et un identificateur indiquant un réseau mobile auquel les abonnés mobiles récepteurs sont affiliés au moment présent,
un processeur d'analyse (46) pouvant effectuer les opérations suivantes : déterminer à partir du numéro d'identité d'abonné mobile international si chacun des abonnés mobiles récepteurs est un abonné mobile itinérant entrant qui visite un réseau mobile auquel l'abonné mobile récepteur est affilié au moment présent, et
si l'abonné mobile récepteur est un abonné mobile itinérant entrant, déterminer à partir de l'identificateur du réseau si le réseau mobile (PLMN2) auquel l'abonné mobile itinérant entrant est affilié au moment présent est l'un de la multiplicité de réseaux mobiles vis-à-vis desquels on détermine la distribution relative d'abonnés mobiles itinérants entrants, et
si le réseau mobile (PLMN2) auquel l'abonné mobile itinérant entrant est affilié au moment présent est l'un de la multiplicité de réseaux, compter l'abonné mobile itinérant entrant comme étant affilié au réseau identifié de la multiplicité de réseaux, pour déterminer la distribution relative des abonnés itinérants entrants.

9. Analyseur selon la revendication 8, dans lequel les données de signalisation incluent des premières données de signalisation envoyées au centre de commutation de messages à partir d'un réseau mobile nominal de l'abonné mobile récepteur, en réponse à un message d'information de routage d'envoi pour un datagramme de message envoyé par le centre de service de messages vers le réseau mobile nominal, pour router le datagramme vers l'abonné mobile récepteur.

10. Analyseur selon la revendication 9, dans lequel l'analyseur peut fonctionner de façon à :
analyser les premières données de signalisation pour déterminer si les premières données de signalisation incluent une version répétitive des données de signalisation qui est envoyée plus d'une fois pour le même abonné mobile entrant, et le comptage comprend le comptage de l'abonné mobile entrant une seule fois par numéro d'identité d'abonné mobile international.

11. Analyseur selon la revendication 8, dans lequel les données de signalisation incluent des deuxièmes données de signalisation envoyées par le centre de commutation de messages vers le réseau mobile auquel l'abonné mobile récepteur est affilé au moment présent, les deuxièmes données de signalisation incluant le numéro d'abonné mobile international et l'identificateur du réseau mobile auquel l'abonné mobile récepteur est affilié.

12. Analyseur selon l'une quelconque des revendications 8 à 11, dans lequel au moins un du réseau mobile nominal (PLMN1) de l'abonné mobile récepteur et du réseau nominal (PLMN1) de l'abonné mobile émetteur est l'un de la multiplicité de réseaux mobiles vis-à-vis desquels on détermine la distribution relative d'abonnés mobiles itinérants entrants.

13. Analyseur selon l'une quelconque des revendications 8 à 12, dans lequel le processeur d'analyse (46) peut fonctionner de façon à détecter que le datagramme de message a été généré par un élément de réseau à l'intérieur du réseau mobile nominal (PLMN1), et le comptage comprend l'opération consistant à ne pas compter l'abonné mobile récepteur auquel le datagramme de message est envoyé.

14. Analyseur selon l'une quelconque des revendications 8 à 13, dans lequel le processeur d'analyse (46) peut fonctionner de façon à déterminer, d'après une plage prédéterminée de valeurs numériques de numéros d'identité d'abonné internationaux associée à chaque opérateur de réseaux mobiles, qu'un réseau nominal (PLMN1) de l'abonné mobile récepteur n'est pas l'un de la multiplicité de réseaux vis-à-vis desquels on détermine la distribution relative.

15. Système de télécommunication comprenant :
une multiplicité de réseaux mobiles (PLMN1, PLMN2), et
un appareil d'analyse (46) tel que revendiqué dans l'une quelconque des revendications 8 à 14, pouvant fonctionner de façon à déterminer une distribution relative d'abonnés mobiles itinérants entrants dans la multiplicité de réseaux mobiles.

16. Programme informatique fournissant des instructions exécutables par ordinateur qui, lorsqu'il est chargé dans un ordinateur, fait exécuter à l'ordinateur le procédé conforme à l'une quelconque des revendications 1 à 7.

17. Porteur de données ayant un support d'enregistrement sur lequel est enregistré un programme informatique conforme à la revendication 16.

18. Signal représentant le programme informatique conforme à la revendication 16.
